# EUROPÄISCHE PATENTANMELDUNG

(11) **EP 1 207 070 A2**
(43) Veröffentlichungstag der Anmeldung: **22.05.2002**
(21) Anmeldenummer: 01125967.8
(22) Anmeldetag: 31.10.2001
(51) Int. Cl.: B60J 7/22

(54) **Windabweiser für eine Schiebedachöffnung eines Kraftwagens**

(30) Priorität: 16.11.2000 DE 10056754
(71) Anmelder: DaimlerChrysler AG, 70567 Stuttgart (DE)
(72) Erfinder: Konermann, Martin, 70186 Stuttgart (DE)

(57) **Zusammenfassung**

Die Erfindung betrifft einen Windabweiser für eine Schiebedachöffnung (5) eines Kraftwagens (1), mit einem bei geöffnetem Schiebedach (4) gegenüber der vorderen Dachausschnittskante erhaben überstehenden Windabweisprofil (8), das vom Fahrtwind durchströmt ist, wozu das Windabweisprofil (8) an einer Stirnseite eine Reihe von über seine Breite verteilt angeordneten Lufteintrittsöffnungen (4) und an einer benachbarten Profilseite eine Reihe mit Luftaustrittsöffnungen (18) aufweist.

Erfindungsgemäß ist das Windabweisprofil (8) als Hohlprofil ausgebildet, wobei die obere Begrenzungswand des Windabweisprofils von den Luftaustrittsöffnungen (18) durchsetzt ist.

## Beschreibung

Die Erfindung betrifft einen Windabweiser für eine Schiebedachöffnung eines Kraftwagens gemäß dem Oberbegriff des Patentanspruchs 1.

Aus der DE 40 12 569 C1 ist ein Windabweiser für Schiebedachöffnungen eines Kraftwagens bekannt. Bei geöffnetem Schiebedach steht das Windabweisprofil über die vordere Dachausschnittskante über, so daß die an der Dachfläche entlangstreichende Luftströmung durch das erhabene Windabweisprofil abgelenkt wird. Durch entsprechend ausgebildete und über die Breite des Windabweisprofils verteilte Lufteintritts- und Luftaustrittsöffnungen werden hinter dem Windabweisprofil Turbulenzen gebildet, die unerwünschte niederfrequente Schwingungen, wie beispielsweise das sogenannte Wummern, vermeiden.

Sofern jedoch Schiebedachöffnungen von Kraftwagen großflächiger ausgelegt werden, können die in der DE 40 12 569 C1 aufgeführten Maßnahmen zur Wummerunterdrückung unter Umständen nicht ausreichend sein. Zudem kann bei großem Fahrzeuginnenraumvolumen, wie beispielsweise bei Kombinationskraftwagen, die ankommende Luftströmung nicht stark genug aufgewirbelt werden, um das Wummern zu unterdrücken.

Der Erfindung liegt somit die Aufgabe zugrunde einen Windabweiser dahingehend weiterzuentwickeln, daß unter Beibehaltung der Zugfreihaltung im Fahrzeuginnenraum Wummergeräusche auch bei großem Fahrzeuginnenraumvolumen und großflächigen Schiebdachöffnungen unterdrückt werden.

Die Aufgabe wird erfindungsgemäß durch die Merkmale des Patentanspruchs 1 gelöst.

Die an einer Stirnseite des Windabweisprofils durch die Lufteintrittsöffnungen eintretende Teilströme werden innerhalb des Hohlprofils umgelenkt und treten mit relativ hoher Geschwindigkeit nahezu senkrecht zur Hauptströmung durch die die obere Begrenzungswand durchsetzenden Luftaustrittsöffnungen aus. Dadurch bilden sich oberhalb des Windabweisprofils Turbulenzen, die eine gezielte Beeinflussung der Dachüberströmung im Bereich der Schiebedachöffnung ermöglichen.

Durch den oberhalb der Luftaustrittsöffnungen wirkenden Unterdruck wird durch das nach unten offene Hohlprofil auch Luft aus dem Fahrzeuginnenraum angesaugt.

Eine Verstärkung der Turbulenzen kann erreicht werden, indem das Windabweisprofil entlang seiner Profilerstreckung in Fahrzeugquerrichtung Erhebungen und Ausnehmungen, sogenannte Turbulenzkerben, aufweist. Bei entsprechender Kombination kann der Windabweiser in seiner Höhe reduziert werden, so daß weniger Bauraum benötigt wird.

Eine mittige Anordnung der Lufteintrittsöffnungen zwischen der Dachausschnittskante und der oberen Begrenzungswand des Windabweisprofils bewirkt, daß der Staudruck optimal ausgenutzt werden kann.

In einer bevorzugten Ausführungsform durchsetzen die Lufteintrittsöffnungen die vordere Stirnwand des Windabweisprofils.

In Abhängigkeit der Dachform bzw. der Schiebedachöffnung kann es vorteilhaft sein, das nach unten offene Hohlprofil auch durch eine Schließplatte zu schließen.

Je nach Druckverhältnissen können Lufteintrittsöffnungen auch an der hinteren Stirnseite des Windabweisprofils vorgesehen sein.

Wenn Luftaustrittsöffnungen an den höchsten Stellen im Bereich der Erhebungen des Windabweisprofils angeordnet sind, kann die das Windabweisprofil überströmende Hauptströmung in verstärktem Maße nach oben abgelenkt werden, so daß besonders großflächige Schiebedachöffnungen überbrückt werden können.

Weitere vorteilhafte Ausgestaltungen der Erfindung werden anhand der Zeichnung erläutert. Dabei zeigen:
- Fig. 1: eine Übersichtsdarstellung eines Kraftwagens in einer Ansicht schräg von vorn,
- Fig. 2: der Windabweiser gemäß Fig. 1 in einer Einzeldarstellung in einer Ansicht schräg von vorn,
- Fig. 3: das Windabweisprofil in einer Schnittdarstellung gemäß Linie A-A in Fig. 2,
- Fig. 4: eine erste alternative Ausführungsform des Windabweisprofils sowie
- Fig. 5: eine zweite alternative Ausführungsform des Windabweisprofils.

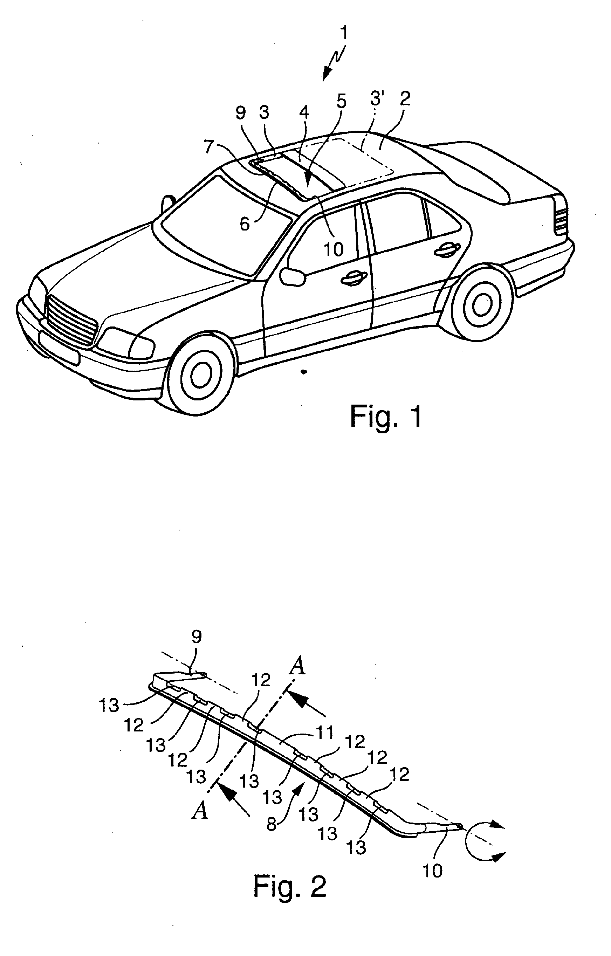

Fig. 1 zeigt einen skizziert dargestellten Kraftwagen 1, dessen obere Dachfläche 2, einen rechteckigen Dachausschnitt 3 aufweist, welcher durch ein Schiebedach 4 verschließbar ist. Damit der an der Dachfläche 2 entlangstreichende Fahrtwind nicht in Form von unkontrollierbaren Luftwirbeln durch den Dachausschnitt 3 in den Innenraum 5 dringt, ist an der vorderen Dachausschnittskante 6 ein Windabweiser 7 angeordnet, dessen langgestrecktes Windabweisprofil 8 vor dem Dachausschnitt 3 ansteigend über die Dachfläche 2 aufragt. Der Windabweiser 7 ist u-förmig gestaltet, wobei quer am Windabweisprofil 8 angeformte Stege 9 und 10 an den seitlichen Dachausschnittskanten angelenkt sind. Das Schiebedach 4 gleitet beim Schließen auf den Stegen 9 und 10 entlang und bewegt so den Windabweiser 7 unter die Dachfläche 2, bis der Dachausschnitt 3 durch das Schiebedach 4 vollständig verschlossen ist.

Der Aufbau und die Funktionsweise des Windabweisers sollen nunmehr anhand von Fig. 2 erläutert werden. Das Windabweisprofil 8 weist an seiner oberen Begrenzungswand 11 mehrere nebeneinander angeordnete Erhebungen 12 auf, die durch Ausnehmungen 13 voneinander beabstandet sind. Die auch als Turbulenzkerben bezeichnete Oberflächenstruktur des Windabweisprofils 8 bewirken richtungsorientierte und hochfrequente Verwirbelungen hinter dem Windabweiser 7 und verringern damit das Eindringen von Luftwirbeln in den Fahrzeuginnenraum 5.

Bei größeren Dachausschnitten 3', wie in Fig. 1 strichpunktiert dargestellt, können die durch Erhebungen 12 und Ausnehmungen 11 charakterisierten Turbulenzkerben unter Umständen nicht ausreichen, um Wummergeräusche hinreichend zu unterdrücken.

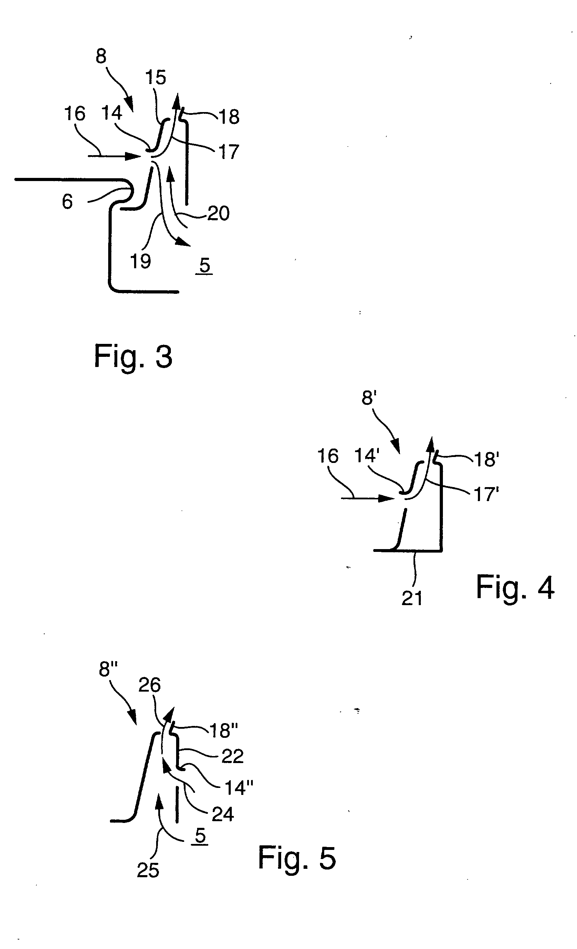

Wie aus der Schnittdarstellung in Fig. 3 ersichtlich, ist das gegenüber der vorderen Dachausschnittskante 6 erhaben überstehenden Windabweisprofil 8 als Hohlprofil ausgebildet. Über die Breite des Windabweisprofils 8 sind Lufteintrittsöffnungen 14 an der vorderen Stirnseite 15 vorgesehen, durch die ein Teilstrom des an der Dachfläche 2 entlangstreichenden Fahrtwinds 16 in das Hohlprofil strömt. Durch die jeweils wirkenden Druckverhältnisse oberhalb und unterhalb des Windabweisprofils 8 kommt es zur Umlenkung der eintretenden Strömung nach oben in Pfeilrichtung 17 zu den die obere Begrenzungswand 11 durchsetzenden Luftaustrittsöffnungen 18 und/oder nach unten in Pfeilrichtung 19 zum Fahrzeuginnenraum 5. Zusätzlich kann Luft aus dem Fahrzeuginnenraum 5 gemäß Pfeilrichtung 20 nach oben angesaugt werden. Die dadurch oberhalb des Windabweisprofils 8 entstehenden Verwirbelungen bewirken eine Auslenkung des Fahrtwindes 16 über den gesamten Dachausschnitt 3, so daß Wummergeräusche wirksam unterdrückt werden können.

Je nach Anforderung an den Windabweiser und in Abhängigkeit des jeweiligen Dachausschnitts sowie des Fahrzeuginnenraumvolumens können die Lufteintrittsöffnungen.an unterschiedlichen Positionen angeordnet und das Hohlprofil des Windabweisprofils entsprechend ausgestaltet werden.

In einer Ausführungsform gemäß Fig. 4 ist das Windabweisprofil 8' mit einer Schließplatte 21 geschlossen, so daß der das Windabweisprofil 8' durchsetzende Teilstrom 17' nur nach oben abgelenkt wird und durch die ebenfalls an der oberen Begrenzungswand 11' angeordneten Luftaustrittsöffnungen 18' austritt.

In einer weiteren Ausführungsform gemäß Fig.5 sind an der rückwärtigen Stirnwand 22 des Winabweisprofils 8'' Lufteintrittsöffnungen 23 vorgesehen, durch die jeweils ein mit Pfeil 24 gekennzeichneter Teilstrom in den Hohlquerschnitt einströmt. Gleichzeitig wird durch die wirkenden Unterdruckverhältnisse über dem Windabweisprofil 8'' aus dem Fahrzeuginnenraum 5 Luft in Pfeilrichtung 25 bewegt, die an den Luftaustrittsöffnungen 18'' in Pfeilrichtung 26 mit relativ hoher Geschwindigkeit austritt und dadurch Luftverwirbelungen oberhalb des Windabweisprofils erzeugt.

Die Lufteintritts- und Luftaustrittsöffnungen sind über die gesamte Breite des Windabweisprofils verteilt, um gezielt die Durchströmung des Windabweisprofils zu beeinflussen. Die Geometrie der Lufteintritts- bzw. Luftaustrittsöffnung können je nach Strömungsverhältnissen gestaltet sein und beispielsweise einen runden oder eckigen Querschnitt aufweisen oder als Schlitze ausgebildet sein. Die Anordnung der Luftaustrittsöffnungen kann bei einem Windabweisprofil mit Turbulenzkerben entweder im Bereich der Ausnehmungen oder auch der Erhebungen erfolgen. Je höher die Luftaustrittsöffnung im Windabweisprofil angeordnet ist, desto nachhaltiger wird die Dachüberströmung beeinflußt.

## Patentansprüche

1. Windabweiser für eine Schiebedachöffnung eines Kraftwagens, mit einem bei geöffnetem Schiebedach gegenüber der vorderen Dachausschnittskante erhaben überstehenden Windabweisprofil, das vom Fahrtwind durchströmt ist, wozu das Windabweisprofil an einer Stirnseite eine Reihe von über seine Breite verteilt angeordneten Lufteintrittsöffnungen und an einer benachbarten Profilseite eine Reihe mit Luftaustrittsöffnungen aufweist,
**dadurch gekennzeichnet,**
**daß** das Windabweisprofil (8) als Hohlprofil ausgebildet ist, wobei die obere Begrenzungswand (11) des Windabweisprofils (8) von den Luftaustrittsöffnungen (18) durchsetzt ist.

2. Windabweiser nach Anspruch 1,
**dadurch gekennzeichnet,**
**daß** das Windabweisprofil (8) einen nach unten einseitig offenen Hohlquerschnitt aufweist, wobei sich die vordere Stirnseite (15) zum Fahrzeugheck ansteigend erstreckt.

3. Windabweiser nach Anspruch 2,
**dadurch gekennzeichnet,**
**daß** das Windabweisprofil (8) entlang seiner Profilerstreckung in Fahrzeugquerrichtung Erhebungen (12) aufweist, die durch anschließend angeordnete Ausnehmungen (13) voneinander beabstandet sind.

4. Windabweiser nach Anspruch 3,
**dadurch gekennzeichnet,**
**daß** die Lufteintrittsöffnungen (14) zwischen der vorderen Dachausschnittskante (6) und der oberen Begrenzungswand (11) etwa mittig in der Stirnseite (15, 22) des Windabweisprofils (8) angeordnet sind.

5. Windabweiser nach Anspruch 4,
**dadurch gekennzeichnet,**
**daß** die über die Breite des Windabweisprofils (8) verteilten Lufteintrittsöffnungen (14) die vordere Stirnseite (15) durchsetzen.

6. Windabweiser nach Anspruch 5,
**dadurch gekennzeichnet,**
**daß** das nach unten einseitig offene Windabweisprofil (8) durch eine Schließplatte (21) geschlossen ist.

7. Windabweiser nach Anspruch 4,
**dadurch gekennzeichnet,**
**daß** die über die Breite des Windabweisprofils (8) verteilten Lufteintrittsöffnungen (14) die hintere Stirnseite (22) durchsetzen.

8. Windabweiser nach Anspruch 4,
**dadurch gekennzeichnet,**
**daß** die Luftaustrittsöffnungen (18) im Bereich der Erhebungen (12) die obere Begrenzungswand (11) des Windabweisprofils (8) durchsetzen.
